# EUROPEAN PATENT APPLICATION

(11) **EP 2 775 725 A1**
(43) Date of publication of application: **10.09.2014**
(21) Application number: 13004105.6
(22) Date of filing: 19.08.2013
(51) Int. Cl.: H04N 21/2665, H04N 21/2668, H04N 21/475, H04N 21/482

(54) **Method for virtual channel management, network-based multimedia reproduction system with virtual channel, and computer readable storage medium**

(30) Priority: 07.03.2013 TW 102108096
(71) Applicant: Wistron Corporation, Hsichih, 22181 New Taipei City (TW)
(72) Inventor: Chang, Ching-Chih, 22181 New Taipei City (TW); Chang, Hui-Liang, 22181 New Taipei City (TW)
(74) Representative: Schmidt, Steffen J.

(57) **Abstract**

Method for virtual channel management, in an embodiment, for use in an electronic device includes the following steps. At least one command indicating virtual channel management is detected. Management of virtual channel data is performed according to the at least one command and updated virtual channel data is then generated. Virtual channel data synchronization is performed by transmitting the updated virtual channel data to a network-based multimedia reproduction system wirelessly so that the network-based multimedia reproduction system provides virtual channel operation mode according to the updated virtual channel data. The management of virtual channel data includes at least one of virtual channel addition, virtual channel deletion, and virtual channel amendment. The updated virtual channel data includes attribute data of a virtual channel, and the attribute data includes at least one link for video and audio.

## Description

### BACKGROUND

### Technical Field

The disclosure relates in general to a method and apparatus for content selection of a network-based multimedia reproduction system, and more particularly to a method for virtual channel management and a network-based multimedia reproduction system with virtual channel.

### Description of the Related Art

Transmitting videos via the broadband Internet is currently a prevalent alternative way for watching videos or television programs. To play an Internet video or browse Internet TV in a smart television, a corresponding application, which has its own user interface and way of providing contents, needs to be pre-installed or installed by a user.

Such kind of televisions are generally designed based on the ways for operating applications in personal computers so that a user for merely selecting desired contents has to look at a screen and operate a remote controller in a careful manner similar to that on a personal computer. In addition, with diversified contents and types provided by the Internet, a relaxed atmosphere of enjoying watching the television as originally intended may instead turn out to be serious and complicated. In this way, such a television causes difficulties of usage in a family or group and fails to satisfy the needs of different users, for example, those who are unfamiliar with operating a computer.

### SUMMARY

The disclosure is directed to a method for virtual channel management and a network-based multimedia reproduction system with virtual channel.

According to an embodiment of the disclosure, a method for virtual channel management for use in an electronic device is provided. The method includes the following steps at the electronic device. (a) At least one command with respect to virtual channel management is detected. (b) Management on virtual channel data stored in the electronic device is performed according to the at least one command to generate updated virtual channel data. (c) The updated virtual channel data is wirelessly transferred to a network-based multimedia reproduction system to perform virtual channel data synchronization so as to facilitate the network-based multimedia reproduction system to provide virtual channel operation mode according to the updated virtual channel data. The management performed on the virtual channel data includes: at least one of a plurality of operations, the operations include: virtual channel addition operation, virtual channel deletion operation, and virtual channel amendment operation, the updated virtual channel data includes attribute data corresponding to a virtual channel, the attribute data corresponding to the virtual channel includes at least one audio-video source link.

Another embodiment provides a computer readable storage medium having stored program code of one or more program modules, which, when executed by an electronic device, causes the electronic device to perform the method for virtual channel management as above.

Another embodiment provides a method for virtual channel management for use in a network-based multimedia reproduction system. The method includes the following steps at the network-based multimedia reproduction system. (a) A virtual channel operation mode is provided, wherein the virtual channel operation mode including an operation mode for virtual channel data management and an operation mode for virtual channel content playing. (b) Searching for an electronic device of a wireless network is made if a synchronization criterion is satisfied. (c) A request for connection is sent so as to link with a first electronic device found by the searching. (d) Virtual channel data synchronization is performed by wirelessly transferring virtual channel data to the first electronic device so that the first electronic device provides the operation mode for virtual channel data management according to the virtual channel data. The operation mode for virtual channel data management includes: a plurality of operations the operations including: virtual channel addition operation, virtual channel deletion operation, and virtual channel amendment operation, the virtual channel data includes attribute data corresponding to a virtual channel, the attribute data corresponding to the virtual channel includes at least one audio-video source link.

Still another embodiment provides a computer readable storage medium having stored program code of one or more program modules, which, when executed by a network-based multimedia reproduction system, causes the network-based multimedia reproduction system to perform the method for virtual channel management as above.

Further another embodiment provides a network-based multimedia reproduction system with virtual channels, which includes: a display unit, a storage unit, a network unit, and a control unit. The control unit, coupled to the network unit and the display unit, controls at least the network unit and the display unit to provide a virtual channel operation mode, the virtual channel operation mode including an operation mode for virtual channel data management and an operation mode for virtual channel content playing. When a synchronization criterion is satisfied, the control unit is operative to control the network-based multimedia reproduction system to: utilize the network unit to search an electronic device of a wireless network; utilize the network unit to link with a first electronic device found during the searching; and utilize the network unit to wirelessly transfer virtual channel data to the first electronic device to perform virtual channel data synchronization so that the first electronic device provides the operation mode for virtual channel data management according to the virtual channel data. The operation mode for virtual channel data management includes: a plurality of operations including: virtual channel addition operation, virtual channel deletion operation, and virtual channel amendment operation, the virtual channel data includes attribute data corresponding to a virtual channel, the attribute data corresponding to the virtual channel includes at least one audio-video source link.

The above and other aspects of the invention will become better understood with regard to the following detailed description of the preferred but non-limiting embodiments. The following description is made with reference to the accompanying drawings.

### BRIEF DESCRIPTION OF THE DRAWINGS

FIG. 1 is a schematic diagram of a network-based multimedia reproduction system with virtual channels that receives a command.

FIG. 2 is a schematic diagram of a network-based multimedia reproduction system that provides virtual channel operation mode.

FIG. 3 is a schematic diagram illustrating a network-based multimedia reproduction system and a handheld device for virtual channel management.

FIG. 4 is a flowchart of an embodiment of a method for virtual channel management for use in a handheld device.

FIG. 5 is a flowchart of another embodiment of a method for virtual channel management for use in a handheld device.

FIG. 6 is a flowchart of an embodiment of a method for virtual channel management for use in a network-based multimedia reproduction system.

FIG. 7 is a block diagram illustrating an embodiment for a basic structure of an electronic device with virtual channels.

### DETAILED DESCRIPTION

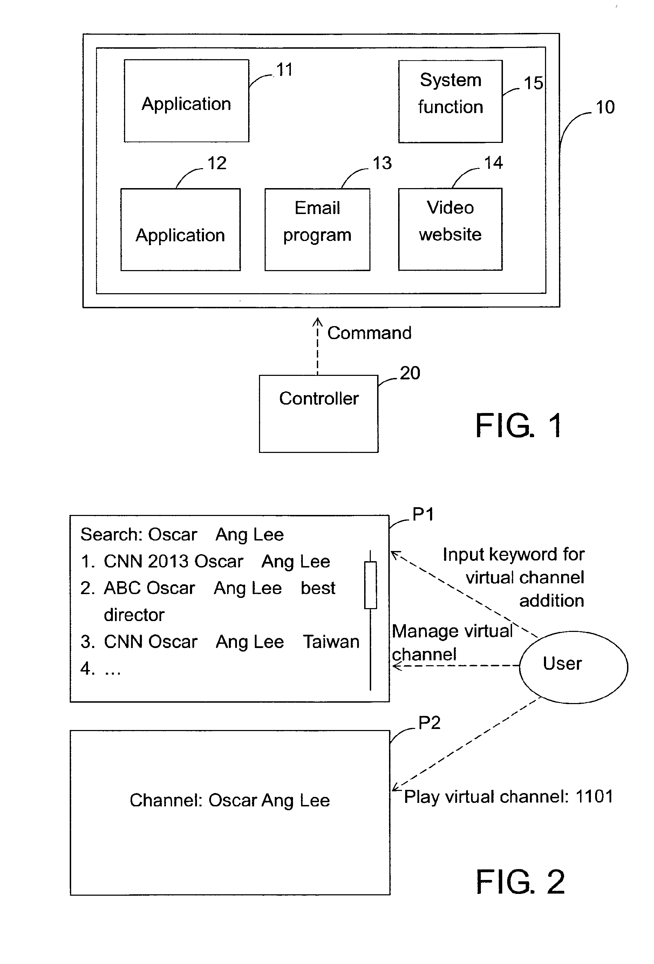

Referring to FIG. 1, a schematic diagram of a network-based multimedia reproduction system with virtual channels that receives a command is provided. For example, the network-based multimedia reproduction system is a display and/or playback system having the functionality of linking a multimedia source on the Internet (e.g., through wired or wireless manner), such as an Internet TV, a smart TV, a network multimedia player or device.

As illustrated in FIG. 1, a virtual channel corresponds to an operation mode of an application (such as applications 11 to 14) in the network-based multimedia reproduction system 10. Selecting a specific virtual channel is to activate the corresponding application (or a number of associated programs or modules) so as to display desired contents on a screen of the network-based multimedia reproduction system. The application, when executed, presents its digital contents in full screen or other proportion. The network-based multimedia reproduction system 10 receives a command sent from a controller 20 (e.g., an electronic device such as a remote controller or a handheld device), and determines whether the command is associated with virtual channel switching. For example, a user presses a channel code 1001 or 200 of the virtual channels to indicate that the user wants to watch a particular online program with an application 11 (e.g., a video on YouTube) or view emails in the inbox for a particular email account with an email program 13. For another example, a channel jump or return, an input source change, a setting of a favorite channel list or an electronic program guide (EPG), performed on the controller 20 may all trigger channel switching.

Referring to FIG. 2, a schematic diagram of a network-based multimedia reproduction system that provides a virtual channel operation mode is shown. The virtual channel operation mode includes an operation mode for virtual channel data management and an operation mode for virtual channel content playing. The operation mode for virtual channel content playing plays virtual channel contents by switching or selecting television channels, as illustrated in FIG. 1. The operation mode for virtual channel data management includes: a plurality of operations including: virtual channel addition operation, virtual channel deletion operation, and virtual channel amendment operation. The network-based multimedia reproduction system 10 generates or changes the corresponding virtual channel data in response to the operations.

For example, a user by inputting a keyword (e.g., Oscar Ang Lee) instructs the network-based multimedia reproduction system 10 to search for digital contents regarding the keyword, wherein the keyword may be a letter(s), word(s), phrase(s), or sentence(s). The network-based multimedia reproduction system 10 presents the search result in the form of a program list on a screen P1 of the network-based multimedia reproduction system 10. The user can perform virtual channel addition, and then the network-based multimedia reproduction system 10 adds a new virtual channel and makes this virtual channel associated with the contents of the program list, with a channel code (e.g., number 1101 or other code represented). From this, the user can play the contents of the virtual channel by using the way of switching television channels, for example, inputting the channel code 1101 for playing the contents of the virtual channel, as illustrated on a screen P2. In addition, the user can also perform virtual channel deletion operation and virtual channel amendment operation. Each example of virtual channel management can generate or change the corresponding virtual channel data. The virtual channel data, for example, includes attribute data corresponding to each virtual channel, and the attribute data corresponding to one virtual channel includes one or more audio-video source links.

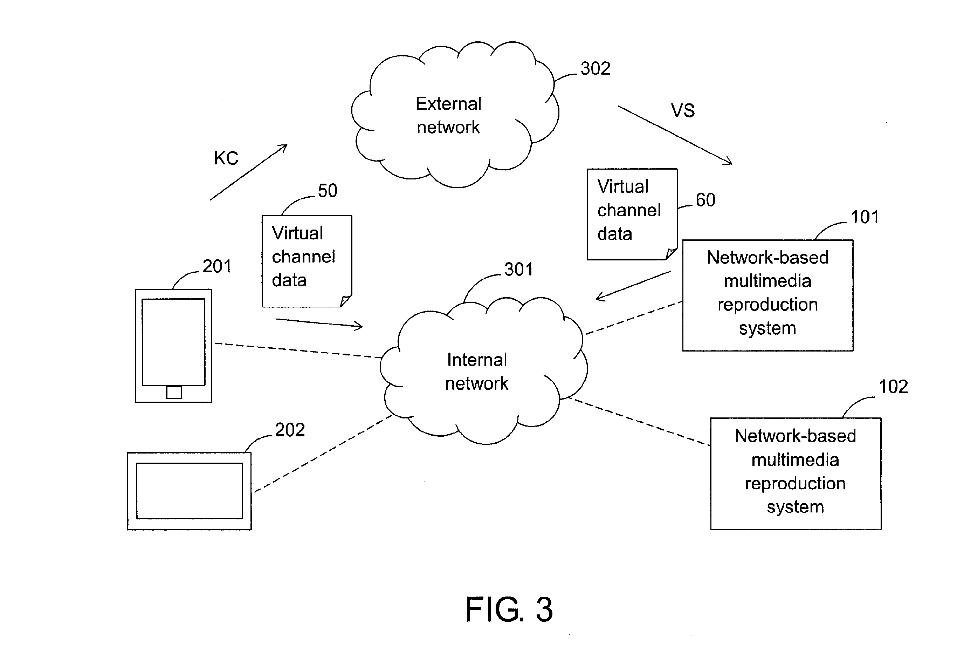

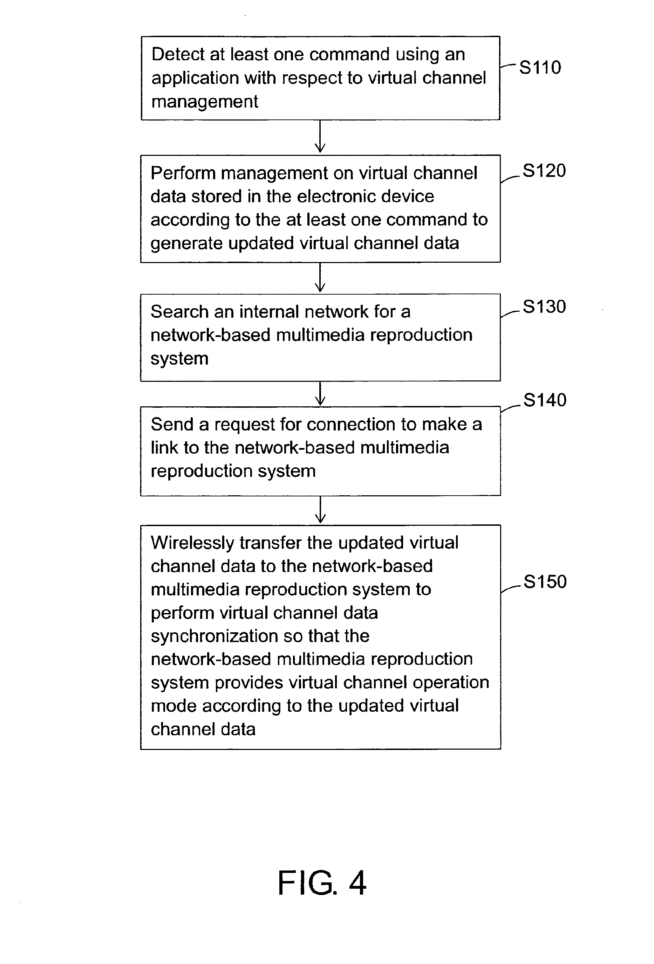

Referring to FIG. 3, a schematic diagram illustrates a network-based multimedia reproduction system and a handheld device for virtual channel management. FIG. 4 shows a flowchart of an embodiment of a method for virtual channel management for use in a handheld device. This embodiment can be applied to an electronic device 201 for the user to manage virtual channels, thus bringing better experience of usage for the user and enhancing flexibility of usage with virtual channels of the network-based multimedia reproduction system 101. The method, for example, can be realized as an application (e.g., App) for virtual channel management (such as, addition, deletion, amendment of virtual channels) and executed in portable electronic devices such as smart phones, tablet computers and so on, which utilize operating systems such as iOS, Android or Windows.

As illustrated in step S110, at least one command, for example, a command of text input or voice input is detected by the application. As in step S120, management is performed on virtual channel data stored in the electronic device 201 by the application according to the at least one command to generate updated virtual channel data 50, which is in the form of a program list or database, for example, for specifying virtual channel data database, virtual channel program database in XML (Extended Mark-up Language). The management performed on the virtual channel data includes: at least one of a plurality of operations, including: virtual channel addition operation, virtual channel deletion operation, and virtual channel amendment operation.

After the updated virtual channel data 50 is generated, in step S130, the electronic device is controlled by using an application to search a wireless network for any network-based multimedia reproduction system. As shown in step S140, a request for connection is sent by using the application to make a link to a network-based multimedia reproduction system 101, which is found by the search. As shown in step S150, the updated virtual channel data is wirelessly transferred to the network-based multimedia reproduction system 101 to perform virtual channel data synchronization so as to facilitate the network-based multimedia reproduction system 101 to provide the virtual channel operation mode, as illustrated above, according to the updated virtual channel data 50; for example, acquiring digital contents VS (e.g., video or audio contents) from an external network 302 (e.g., video sharing website) according to the attribute data of a virtual channel.

In step S130, the internal network, such as a wireless local area network or home network, links one or more electronic devices with the network-based multimedia reproduction system. If any other network-based multimedia reproduction system(s) is found during the search, then steps S140 and S150 can be performed again with respect to the other network-based multimedia reproduction system (e.g., 102).

In one embodiment, the network-based multimedia reproduction system 101 can provide an operation mode for common virtual channel and an operation mode for personalized virtual channel, wherein a personalized virtual channel can be selected and played by only an associated user and a common virtual channel can be selected and played by all users. In this manner, the virtual channel data 50 updated by using the electronic device 201 for a user includes a common virtual channel list and a personalized virtual channel list. According to this embodiment, step S150, for example, includes the following steps: performing synchronization of the common virtual channel list with the network-based multimedia reproduction system; and performing synchronization of the personalized virtual channel list with the network-based multimedia reproduction system. Besides, in other embodiments, the virtual channel data includes, for example: program information, service information (information about website service in the Internet), user information; and synchronization can be performed selectively, for example, for a portion which has changed of the virtual channel data.

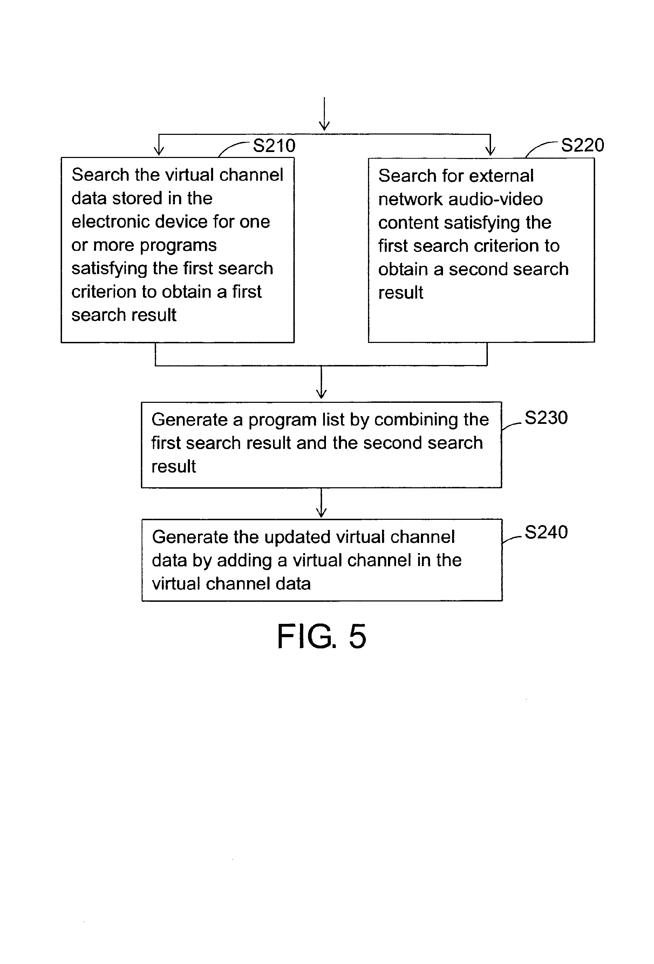

In one embodiment, the at least one command detected in step S110 indicates adding a first virtual channel for a first search criterion KC, wherein the first search criterion KC includes a keyword. Hence, the operation of updating the virtual channel data in step S120 includes the virtual channel addition operation. In this embodiment, step S120 further includes the steps in FIG. 5. As illustrated in step S210, the electronic device 201 searches the virtual channel data stored in the electronic device 201 for one or more programs satisfying the first search criterion KC to obtain a first search result. As shown in step S220, the electronic device 201 searches for external network audio-video content satisfying the first search criterion KC to obtain a second search result. As in step S230, the electronic device 201 generates a program list by combining the first search result and the second search result, wherein the program list includes a plurality of programs corresponding to the keyword. As shown in step S240, the electronic device 201 generates the updated virtual channel data by adding a virtual channel in the virtual channel data, wherein program content of the virtual channel corresponds to the content of the program list.

The embodiment of FIG. 5 can be applied to a handheld device to manage the channel contents of the network-based multimedia reproduction system 101 so that the user can add a virtual channel for a topic of interest by using an electronic device such as a smart phone to search internal and external networks. In this way, it is convenient and flexible for the user to manage virtual channels in anytime and anywhere. The user can manage virtual channels even though the user is out with the handheld device being disconnected to the network-based multimedia reproduction system 101.

In steps S210 and S220, the first search criterion KC may further include another data item to be searched, such as provider, time at which a content is provided, or time duration for a content. In step S210, the first search result (local) is a set of program attribute data satisfying the first search criterion KC. In step S220, the external network video/audio contents satisfying the first search criterion KC include link indications (such as URLs or IP addresses or other manner of addressing) and their attributes of videos (or digital contents) found by using the electronic device 201 to search a video providing platform (such as one or more websites) or a search engine website(s) of the external network 302 (such as the Internet or a default website(s)), for example. These link indications and attributes, which are regarded as the second search result (external), in the form of XML, HTML, or other manner, are sent back from the platform or network to the electronic device 201. The electronic device 201 links to the external network (such as the Internet) through such as a wireless communication network (such as 3G, LTE, or 4G network) or internal network such as wireless local area network (such as Wi-Fi).

In step S230, combining the first search result (local) and the second search result (external) and generating a program list by the electronic device 201 can be performed according to the users' ways or favorite setting, and/or the purpose of providing the latest, best items satisfying the first search criterion. For example, arrangement can be performed in some kind of sequence, such as times of issue, degrees of association, or time length of videos.

Further, in other embodiments based on FIG. 5, the program list generated in step S230 can be displayed on a screen (e.g., a touch screen) of the electronic device 201 in order for the user to edit or modify the order of the program to be played.

Moreover, in other embodiments, steps S130-S140 need not to be performed and instead step S150 is indicated to be performed with the network-based multimedia reproduction system 101 for virtual channel synchronization.

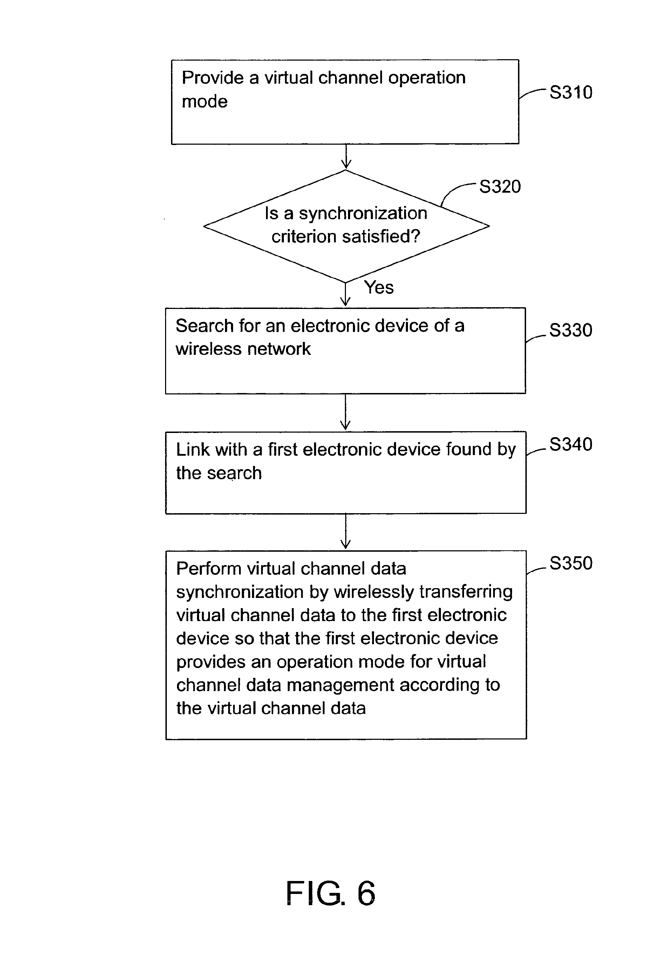

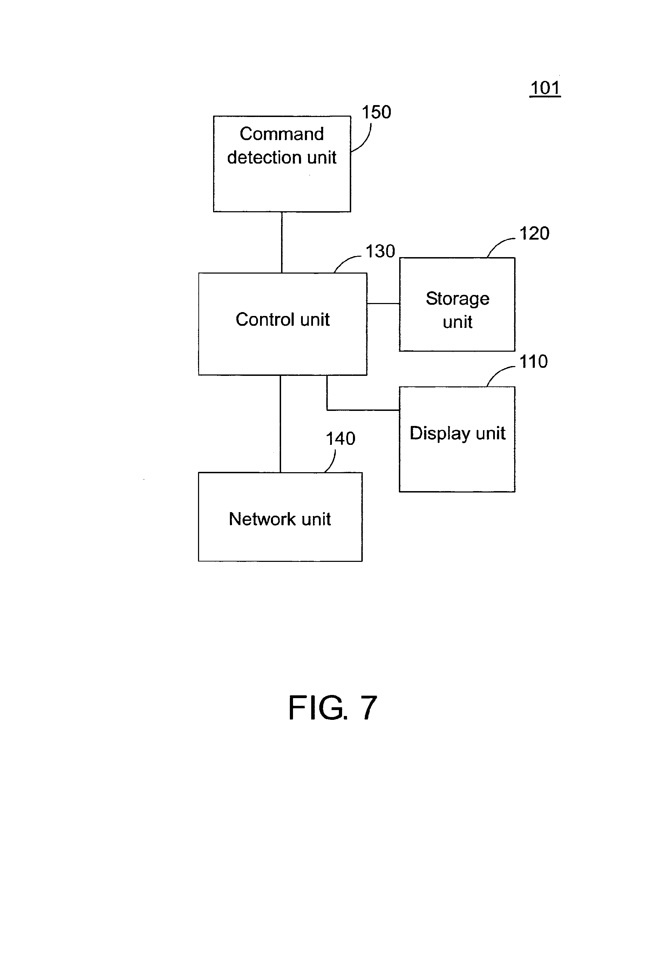

Furthermore, in other embodiments, the network-based multimedia reproduction system 101 can determine whether a synchronization criterion is satisfied so as to perform synchronization of virtual channel data with the user's electronic device. Referring to FIG. 6, a flowchart illustrates an embodiment of a method for virtual channel management for use in a network-based multimedia reproduction system. For the sake of convenience of explanation, referring to FIG. 7, a block diagram illustrates an embodiment for a basic structure of an electronic device with virtual channels. In FIG. 7, the network-based multimedia reproduction system 101 includes a display unit 110, a storage unit 120, a control unit 130, a network unit 140, and an command detection unit 150, wherein the control unit is coupled to the display unit 110 and the network unit 140. Depending on design requirements, the network-based multimedia reproduction system 100 may further include other devices: for example, a television receiving unit, including such as an analog or digital television tuner, and television signal processing circuit; for example, an audio unit, including such as an audio processor, an amplifier and a speaker. The command detection unit 150 is a receiver with a wired or wireless remote controller having physical buttons, or a detection device for voice recognition, facial recognition, or gesture recognition.

Referring to FIG. 6 again, the network-based multimedia reproduction system 101, for example, controls at least the network unit 140 and the display unit 100 by the control unit 130 to provide a virtual channel operation mode, as shown in step S310, wherein the virtual channel operation mode including an operation mode for virtual channel data management and an operation mode for virtual channel content playing. As shown in step S320, it is determined, for example, by using the control unit 130, whether a synchronization criterion is satisfied. If so, the method proceeds to steps S330-S350; for example, the control unit 130 controls the network-based multimedia reproduction system 101 to perform these steps with the network unit 140. As illustrated in step S330, searching for an electronic device of a wireless network is performed. As shown in step S340, a link is made with a first electronic device (e.g., 201), found from the search. As illustrated in step 350, virtual channel data synchronization is performed by wirelessly transferring virtual channel data (such as, 60 in FIG. 3) to the first electronic device so that the first electronic device provides the operation mode for virtual channel data management according to the virtual channel data 60. If any other electronic devices are found in step S330, then performing steps S340 and S350 again on each of the other electronic devices.

In one embodiment, when a physical object is near the network-based multimedia reproduction system, the synchronization criterion of step S320 is satisfied. Hence, the method further includes: detecting whether a physical object is within a range (e.g., the range defined an indoor region or within a distance from the system) by detection unit of the network-based multimedia reproduction system, wherein the synchronization criterion is whether the physical object is within the range; if so, the synchronization criterion is satisfied. For example, the physical object is a human body, a portion of a human body, or an electronic device; and the detection unit is a human body detector, human facial recognition detector, or an near field communication detector. The detection unit, for example, is an audio detector or a microphone, and detects whether the user is within the range by detecting varying of sound. Further, the synchronization performed in the above situation can be called "active transfer" mode.

In another embodiment, when the virtual channel data has changed, for example, the synchronization criterion in step S320 is satisfied. Hence, the method further includes: determining whether the virtual channel data has changed in the network-based multimedia reproduction system, wherein the synchronization criterion is whether the virtual channel data has changed; if so, the synchronization criterion is satisfied. In an example, the virtual channel data is changed by performing management on the virtual channel data at the network-based multimedia reproduction system, wherein the management on the virtual channel data includes at least one of the operations, such as virtual channel addition, deletion, amendment operations of the operation mode for virtual channel data management. That is, when the user performs virtual channel management at the network-based multimedia reproduction system or the system automatically changes the virtual channel data, synchronization can be triggered to perform. The synchronization performed in the above situation can be called "immediate transfer" mode.

Further, the synchronization performed by the method as shown in FIG. 4 for virtual channel management for use in an electronic device can be regarded as "passive transfer" mode with respect to the network-based multimedia reproduction system. The network-based multimedia reproduction system can be implemented so that: the program content of the virtual channel newly added is played after the "passive transfer" mode of synchronization is done.

In other embodiments, for the network-based multimedia reproduction system to implement "active transfer", "immediate transfer", "passive transfer" modes, the network-based multimedia reproduction system, before linking to the electronic device, can determine whether to link to the electronic device by checking whether the electronic device corresponds to the user information recorded in the network-based multimedia reproduction system. In addition, regarding the search for any electronic devices of the internal network, the search can be made for only those registered in the network-based multimedia reproduction system; that is, the search is made for any electronic device(s) with a record in the system. Further, while synchronizing the virtual channel data, for example, user's setting for synchronization or time stamps for the virtual channels can be also updated for the sake of usage for the next synchronization. Furthermore, in some embodiments, the network-based multimedia reproduction system and the electronic device can individually implement module(s) (e.g., using the control unit to execute) for semantic parsing with respect to virtual channel data, search results, program lists, or database and so on, so that data generated by the network-based multimedia reproduction system and electronic device can be interpreted appropriately and utilized, as illustrated in the method above.

In addition, referring to FIG. 7, if the network-based multimedia reproduction system 101 is realized as a network-based multimedia player (e.g., a digital multimedia receiver, such as Apple TV, network setup box), the display unit 100 can be implemented by a display screen integrated with the network-based multimedia player or regarded as a display screen connected to the network-based multimedia player in a wired or wireless manner. Hence, the ways of implementation of the network-based multimedia reproduction system 101 is not limited to the system of FIG. 7; for example, the control unit 130 can be connected to the display unit 110 and memory or other device (e.g., an audio unit) through a memory bus. The structure mentioned in the above description is for the sake of convenience for explanation, and the implementation is not limited thereto.

Besides, the electronic device 201 can be implemented based on FIG. 7 or other structure, for example, with a touch panel, wherein the control unit 130, which can be a single- or multi-core processor, controls the display unit 110 and the network unit 140 to execute an application to perform the embodiments of the virtual channel management method as illustrated in FIG. 4 or 5.

Other embodiments provide a computer or electronic device readable storage medium having stored program code, or one or more program or program modules. For example, the steps in FIG. 4, 5, or 6 can be implemented as program modules. In an example which an embodiment according to FIG. 4 can be implemented as an application of an electronic device, the application can include: a virtual channel management module (or component) to implement step S120; a virtual channel synchronization module (or component) to implement steps S130-150; a virtual channel program retrieving module (or component) to implement step S210-S230; a virtual channel storage module (or component) to implement step S240. The electronic device, when executes the application, performs the method for virtual channel management according to the embodiment of FIG. 4 or 5 or other related embodiment. The embodiment according to FIG. 6 can be realized as system or application software for the network-based multimedia reproduction system. The network-based multimedia reproduction system, when executes such software, performs the method for virtual channel management according to the embodiment of FIG. 6 or other related embodiment. The readable information storage medium in each of the embodiments can be implemented by, without limitation to, an optical information storage medium, a magnetic information storage medium or a memory, such as a memory card, firmware, ROM or RAM, or built-in memory in a programmable microcontroller.

In practical application of the above embodiments, any family member or group member can employ an electronic device such as a smart phone or tablet computer to manage virtual channels, and perform synchronization of virtual channel data with a network-based multimedia reproduction system. In addition, the network-based multimedia reproduction systems in different locations or rooms of the house can be synchronized for virtual channel data. In this way, the operation of virtual channels for the family or group can be consistent, and any individual, who collects network videos while one's electronic device is connected or disconnected to the network-based multimedia reproduction system, can share the network videos with other members in the form of virtual channels. Thus, the users can obtain better experience of usage, and the usage of virtual channels for a network-based multimedia reproduction system can be more convenient and flexible.

While the invention has been described by way of example and in terms of the preferred embodiments, it is to be understood that the invention is not limited thereto. On the contrary, it is intended to cover various amendments and similar arrangements and procedures, and the scope of the appended claims therefore should be accorded the broadest interpretation so as to encompass all such amendments and similar arrangements and procedures.

## Claims

1. A method for virtual channel management, for use in an electronic device, the method comprising:
(a) detecting at least one command with respect to virtual channel management;
(b) performing management on virtual channel data stored in the electronic device according to the at least one command to generate updated virtual channel data; and
(c) wirelessly transferring the updated virtual channel data to a network-based multimedia reproduction system to perform virtual channel data synchronization so as to facilitate the network-based multimedia reproduction system to provide virtual channel operation mode according to the updated virtual channel data;
wherein the management performed on the virtual channel data comprises: at least one of a plurality of operations, the operations comprise:
virtual channel addition operation, virtual channel deletion operation, and
virtual channel amendment operation, the updated virtual channel data includes attribute data corresponding to a virtual channel, the attribute data corresponding to the virtual channel includes at least one audio-video source link.

2. The method according to claim 1, wherein the at least one command indicates adding a first virtual channel for a first search criterion; the virtual channel data is updated by at least one operation comprising the virtual channel addition operation; the step (b) further comprises:
searching the virtual channel data stored in the electronic device for one or more programs satisfying the first search criterion to obtain a first search result, and searching for external network audio-video content satisfying the first search criterion to obtain a second search result, wherein the first search criterion comprises a keyword;
generating a program list by combining the first search result and the second search result, wherein the program list comprises a plurality of programs corresponding to the keyword; and
generating the updated virtual channel data by adding a virtual channel in the virtual channel data, wherein program content of the virtual channel corresponds to the content of the program list.

3. The method according to claim 1, wherein before the steps (c), the method further comprises:
(b1) after the updated virtual channel data is generated, controlling the electronic device by using an application to search a wireless network for a network-based multimedia reproduction system; and
(b2) sending a request for connection by using the application to make a link to a first network-based multimedia reproduction system found during the searching, wherein the first network-based multimedia reproduction system is the same as the network-based multimedia reproduction system that performs virtual channel data synchronization;
wherein if there is any other network-based multimedia reproduction system found during the searching, performing the steps (b2) and (c) with respect to the network-based multimedia reproduction system found during the searching.

4. The method according to claim 3, wherein the updated virtual channel data comprises a common virtual channel list and a personalized virtual channel list, the step (c) comprises:
performing synchronization of the common virtual channel list with the network-based multimedia reproduction system; and
performing synchronization of the personalized virtual channel list with the network-based multimedia reproduction system.

5. A computer readable storage medium having stored program code of one or more program modules, which when executed by an electronic device cause the electronic device to perform a method for virtual channel management according to any one of claims 1-4.

6. A network-based multimedia reproduction system, comprising:
a display unit;
a storage unit;
a network unit; and
a control unit, coupled to the network unit and the display unit, the control unit controlling at least the network unit and the display unit to provide a virtual channel operation mode, the virtual channel operation mode comprising an operation mode for virtual channel data management and an operation mode for virtual channel content playing;
wherein when a synchronization criterion is satisfied, the control unit is operative to control the network-based multimedia reproduction system to:
utilize the network unit to search an electronic device of a wireless network;
utilize the network unit to link with a first electronic device found during the searching; and
utilize the network unit to wirelessly transfer virtual channel data to the first electronic device to perform virtual channel data synchronization so that the first electronic device provides the operation mode for virtual channel data management according to the virtual channel data;
wherein the operation mode for virtual channel data management comprises: a plurality of operations comprising: virtual channel addition operation, virtual channel deletion operation, and virtual channel amendment operation, the virtual channel data includes attribute data corresponding to a virtual channel, the attribute data corresponding to the virtual channel includes at least one audio-video source link.

7. The system according to claim 6, further comprising:
a detection unit operative to detecting a physical object;
wherein the synchronization criterion is whether the physical object is within a range; if the physical object is within the range, the synchronization criterion is satisfied.

8. The system according to claim 7, wherein the detection unit is a human body detector operative to detect whether a user or an electronic device taken as the physical object is within the range.

9. The system according to claim 7, wherein the detection unit is a sound detector, which detects varying of sound to detect whether a user taken as the physical object is within the range.

10. The system according to claim 6, wherein the synchronization criterion is whether the virtual channel data has changed; if so, the synchronization criterion is satisfied.

11. The system according to claim 6, wherein if there is any other electronic devices found during the searching, for each of the other electronic devices, the control unit is operative to control the network-based multimedia reproduction system to:
utilize the network unit to link with another electronic device found during the searching; and
utilize the network unit to wirelessly transfer virtual channel data to the another electronic device to perform virtual channel data synchronization.

12. The system according to any one of claims 6-11, wherein the network-based multimedia reproduction system is a smart television, a networked television, or a network-based multimedia player.
